# FASCICULE DE BREVET EUROPEEN

(11) **EP 3 710 282 B1**
(45) Date de publication et mention de la délivrance du brevet: **28.07.2021**
(21) Numéro de dépôt: 18815272.2
(22) Date de dépôt: 07.11.2018
(51) Int. Cl.: B60C 1/00, C08L 7/00, C08K 3/04

(54) **PNEUMATIQUE PRESENTANT UNE COUCHE D'ARMATURE DE CARCASSE AVEC DES PROPRIETES D'ENDURANCE AMELIOREES**
REIFEN MIT EINER KARKASSENVERSTÄRKUNGSSCHICHT MIT VERBESSERTEN DAUERFESTIGKEITSEIGENSCHAFTEN
TYRE COMPRISING A CARCASS REINFORCEMENT LAYER HAVING IMPROVED ENDURANCE PROPERTIES

(30) Priorité: 17.11.2017 FR 1760862
(43) Date de publication de la demande: 23.09.2020
(73) Titulaire: Compagnie Générale des Etablissements Michelin, 63000 Clermont-Ferrand (FR)
(72) Inventeur: SALGUES, Nathalie, 63040 CLERMONT-FERRAND Cedex 9 (FR); FRISCH, Auriane, 63040 CLERMONT-FERRAND Cedex 9 (FR); GOMMEZ, Arnaud, 63040 CLERMONT-FERRAND Cedex 9 (FR)
(74) Mandataire: Le Cam, Stéphane Georges Elie
(86) Numéro de dépôt international: PCT/FR2018/052749
(87) Numéro de publication internationale: WO 2019/097139

(56) Documents cités:
- WO-A1-2016/184754
- FR-A1- 3 050 962

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier est pénalisée. Pour autoriser un voire deux rechapages de tels pneumatiques afin d'allonger leur durée de vie, il est nécessaire de conserver une structure et notamment une armature de carcasse dont les propriétés d'endurance sont suffisantes pour supporter lesdits rechapages.

Les roulages prolongés dans des conditions particulièrement sévères des pneumatiques ainsi construits font effectivement apparaître des limites en termes d'endurance de ces pneumatiques.

Les éléments de l'armature de carcasse sont notamment soumis à des contraintes de flexion et compression lors des roulages qui vont à l'encontre de leur endurance. Les câbles qui constituent les éléments de renforcement des couches de carcasse sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fatigue-fretting".

Pour remplir leur fonction de renforcement de l'armature de carcasse du pneumatique, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels pour les armatures de sommet des pneumatiques.

Les câbles de l'armature de carcasse sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieur du pneumatique, peuvent être conduits par les canaux formés au sein des câbles du fait même de leur structure.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour améliorer l'endurance de ces câbles de l'armature de carcasse, il est notamment connu d'augmenter l'épaisseur de la couche de caoutchouc qui forme la paroi interne de la cavité du pneumatique pour limiter au mieux la perméabilité de ladite couche. Cette couche est habituellement pour partie composée de butyle de façon à augmenter l'étanchéité du pneumatique. Ce type de matériau présente l'inconvénient d'augmenter le coût du pneumatique.

Il est encore connu de modifier la construction desdits câbles afin notamment d'augmenter leur pénétrabilité par le caoutchouc, et ainsi limiter la dimension du passage des agents oxydants.

Les inventeurs se sont ainsi donnés pour mission de fournir des pneumatiques pour véhicules lourds de type "Poids-Lourds", dont les performances notamment d'endurance sont améliorées notamment au regard des phénomènes de "fatigue-corrosion" ou de "fatigue-fretting-corrosion", quelles que soient les conditions de roulage et dont le coût de fabrication reste acceptable.

Ce but a été atteint selon l'invention par un pneumatique à armature de carcasse radiale, constituée d'au moins une couche d'éléments de renforcement métalliques insérés entre deux couches de calandrage de mélange élastomérique comportant une charge renforçante constituée par au moins du noir de carbone, ledit pneumatique comprenant une armature de sommet, elle-même coiffée radialement d'une bande de roulement, ladite bande de roulement étant réunie à deux bourrelets par l'intermédiaire de deux flancs, ledit pneumatique formant une cavité interne destinée à recevoir l'air de gonflage, le module d'élasticité sous tension à 10 % d'allongement d'au moins la couche de calandrage la plus proche de la cavité interne d'au moins la couche d'armature de carcasse la plus proche de la cavité interne étant inférieur à 8,5 MPa et au moins ladite couche de calandrage la plus proche de la cavité interne d'au moins la couche d'armature de carcasse la plus proche de la cavité interne présentant une résistivité électrique volumique ρ telle que log(ρ) est supérieur à 8.

La résistivité électrique volumique ρ est mesurée en statique selon la norme ASTM D 257, ρ étant exprimé en ohm.cm.

Les inventeurs ont su mettre en évidence qu'un pneumatique ainsi réalisé selon l'invention conduit à des améliorations en termes de compromis endurance coûts de fabrication très intéressants. En effet, les propriétés d'endurance avec un tel pneumatique sont au moins aussi bonnes qu'avec les meilleures solutions évoquées ci-dessus quelle que soient les conditions de roulage sans pour autant augmenter les coûts de fabrication.

Les essais réalisés ont montré que l'utilisation des mélanges élastomériques selon l'invention comportant une charge renforçante constituée par au moins du noir de carbone, présentant un module d'élasticité sous tension à 10 % d'allongement inférieur à 8,5 MPa et une résistivité électrique volumique ρ telle que log(ρ) supérieur à 8, pour réaliser au moins la couche de calandrage la plus proche de la cavité interne d'au moins la couche d'armature de carcasse la plus proche de la cavité interne permet d'améliorer les propriétés du pneumatique en termes d'endurance.

Les inventeurs pensent avoir notamment mis en évidence que le choix de mélanges selon l'invention pour réaliser au moins ladite couche de calandrage la plus proche de la cavité interne d'au moins la couche d'armature de carcasse la plus proche de la cavité interne qui conduisent notamment à une couche de calandrage faiblement conductrice, en comparaison de mélanges plus usuels, limite les phénomènes de corrosion des éléments de renforcement de ladite couche d'armature de carcasse la plus proche de la cavité interne.

Cette limitation du risque de corrosion des éléments de renforcement de la couche d'armature de carcasse peut notamment permettre de limiter les épaisseurs de mélanges élastomériques entre les éléments de renforcement de ladite couche d'armature de carcasse et la cavité interne du pneumatique et donc de limiter les coûts de fabrication du pneumatique.

Cette diminution des épaisseurs des mélanges élastomériques entre les éléments de renforcement de ladite couche d'armature de carcasse et la cavité interne du pneumatique contribuent en outre à un moindre échauffement desdits mélanges notamment dans les zones des bourrelets du pneumatique qui sont fortement sollicitées lors des roulages.

Par ailleurs, les modules d'élasticité sous tension à 10 % d'allongement des calandrages d'au moins la couche de calandrage la plus proche de la cavité interne d'au moins la couche d'armature de carcasse la plus proche de la cavité interne semblent favorables aux performances en termes d'endurance lors de roulage, ceux-ci contribuant encore à un moindre échauffement des zones du pneumatique les plus sollicités. Habituellement, les modules d'élasticité sous tension à 10 % d'allongement des calandrages des couches d'armature de carcasse sont supérieurs à 8.5 MPa et le plus souvent supérieurs à 10 MPa pour limiter les risques de déroulement des couches d'armature de carcasse. Les inventeurs pensent encore que le moindre échauffement des zones du pneumatique les plus sollicités lors de roulage et notamment des zones des bourrelets contribue à limiter le risque de déroulement des couches d'armature de carcasse.

Avantageusement selon l'invention, l'ensemble des couches de calandrage de l'armature de carcasse présente un module d'élasticité sous tension à 10 % d'allongement inférieur à 8,5 MPa et une résistivité électrique volumique ρ telle que log(ρ) est supérieur à 8.

Selon un mode de réalisation préféré de l'invention, la valeur maximale de tan(δ), noté tan(δ)max, d'au moins la couche de calandrage la plus proche de la cavité interne d'au moins la couche d'armature de carcasse la plus proche de la cavité interne, est inférieure à 0.080 et de préférence inférieure à 0.070.

De préférence, l'ensemble des couches de calandrage de l'armature de carcasse présente une valeur maximale de tan(δ), noté tan(δ)max, inférieure à 0.080 et de préférence inférieure à 0.070.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 mm² de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Les résultats exploités sont le module complexe de cisaillement dynamique (G^{*}) et le facteur de perte tan(δ) mesuré sur le cycle retour. Pour le cycle retour, on indique la valeur maximale de tan(δ) observée, noté tan(δ)ₘₐₓ.

La résistance au roulement est la résistance qui apparaît lorsque le pneumatique roule. Elle est représentée par les pertes hystérétiques liées à la déformation du pneumatique durant une révolution. Les valeurs de fréquence liées à la révolution du pneumatique correspondent à des valeurs de tan(δ) mesurée entre 30 et 100°C. La valeur de tan(δ) à 100 °C correspond ainsi à un indicateur de la résistance au roulement du pneumatique en roulage.

Les inventeurs ont encore su mettre en évidence que le choix de mélanges selon ce mode de réalisation préféré de l'invention pour réaliser au moins la couche de calandrage la plus proche de la cavité interne d'au moins la couche d'armature de carcasse la plus proche de la cavité interne permet d'améliorer les propriétés du pneumatique en matière de résistance au roulement, du fait de la valeur relativement faible de la valeur maximale de tan(δ), noté tan(δ)max.

Selon un mode de réalisation préféré de l'invention, au moins la couche de calandrage la plus proche de la cavité interne d'au moins la couche d'armature de carcasse la plus proche de la cavité interne est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET supérieure à 60 m²/g employé à un taux compris entre 20 et 40 pce,
b) soit par du noir de carbone de surface spécifique BET inférieure à 60 m²/g employé à un taux compris entre 20 et 80 pce, et de préférence entre 30 et 50 pce,
c) soit par un coupage de noir de carbone décrit en (a) et/ou de noir de carbone décrit en (b) et/ou une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET comprise entre 50 et 350 m²/g et/ou de surface spécifique CTAB comprise entre 50 et 250 m²/g.

La mesure de surface spécifique BET du noir de carbone est effectuée selon la méthode de BRUNAUER, EMMET et TELLER décrite dans "The Journal of the American Chemical Society", vol. 60, page 309, février 1938, correspondant à la norme D6556-10.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996.

La mesure de surface spécifique CTAB est déterminée selon la méthode NF T 45007 de novembre 1987 (méthode B).

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Avantageusement selon une variante de réalisation de l'invention, les éléments de renforcement métalliques d'au moins la couche d'armature de carcasse la plus proche de la cavité interne sont des câbles non frettés présentant au test dit de perméabilité un débit inférieur à 20 cm³/min.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/min présentent un taux de pénétration supérieure à 66%.

Des câbles présentant au test dit de perméabilité un débit inférieur à 2 cm3/min présentent un taux de pénétration supérieure à 90%.

Selon cette variante de l'invention, la valeur au test dit de perméabilité des éléments de renforcement métalliques d'au moins la couche d'armature de carcasse la plus proche de la cavité interne peut être obtenue avec des mélanges des couches de calandrage présentant une fluidité supérieure à celles des mélanges plus usuels.

De telles valeurs au test dit de perméabilité semblent encore améliorer l'endurance des pneumatiques. En effet, une plus grande pénétration des éléments de renforcement métalliques d'au moins la couche d'armature de carcasse la plus proche de la cavité interne par les mélanges de calandrage est bénéfique à une moindre propagation des agents oxydants au sein des éléments de renforcement. Dans le cas d'agression pouvant libérer l'accès pour les agents oxydants aux éléments de renforcement, une telle pénétration des éléments de renforcement limite les contacts directs entre les agents oxydants et les éléments de renforcement métalliques. L'oxydation des éléments de renforcement continue alors à se faire essentiellement du fait du passage des agents oxydants jusqu'à la couche de calandrage, l'intensité de l'oxydation étant diminuée par le choix des mélanges constituant au moins la couche de calandrage la plus proche de la cavité interne d'au moins la couche d'armature de carcasse la plus proche de la cavité interne qui présentent une faible conductivité électrique.

Avantageusement encore selon l'invention, les câbles de l'armature de carcasse présentent au test dit de perméabilité un débit inférieur à 10 cm³/min et de préférence encore inférieur à 2 cm³/min.

Selon un mode de réalisation préféré selon cette variante de l'invention, les éléments de renforcement métalliques d'au moins une couche de l'armature de carcasse sont des câbles à au moins deux couches, au moins une couche interne étant gainée d'une couche constituée d'une composition de caoutchouc non réticulable, réticulable ou réticulée, de préférence à base d'au moins un élastomère diénique.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être alors qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De tels éléments de renforcement sont par exemple décrits dans la demande de brevet WO 2005/071157.

Selon un mode de réalisation préféré de l'invention, ladite couche constituée d'une composition de caoutchouc non réticulable, réticulable ou réticulée gainant au moins une couche interne des câbles d'au moins la couche d'armature de carcasse la plus proche de la cavité interne du pneumatique, de préférence à base d'au moins un élastomère diénique est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET supérieure à 60 m²/g employé à un taux compris entre 20 et 40 pce,
b) soit par du noir de carbone de surface spécifique BET inférieure à 60 m²/g employé à un taux compris entre 20 et 80 pce, et de préférence entre 30 et 50 pce,
c) soit par un coupage de noir de carbone décrit en (a) et/ou de noir de carbone décrit en (b) et/ou une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET comprise entre 50 et 350 m²/g et/ou de surface spécifique CTAB comprise entre 50 et 250 m²/g.

A titre préférentiel, la composition de ladite couche est choisie identique à la composition utilisée pour au moins la couche de calandrage la plus proche de la cavité interne d'au moins la couche d'armature de carcasse la plus proche de la cavité interne. Ainsi, il n'y a aucun problème d'incompatibilité éventuelle entre les matériaux respectifs de ladite couche et de la couche de calandrage.

Selon une variante de l'invention, les éléments de renforcement métalliques d'au moins la couche d'armature de carcasse la plus proche de la cavité interne sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, une gaine constituée d'une composition de caoutchouc réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Le câble selon l'invention lorsqu'il comporte au moins une couche interne gainée d'une couche constituée d'une composition de caoutchouc non réticulable, réticulable ou réticulée, de préférence à base d'au moins un élastomère diénique pourra être obtenu selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

L'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence à la figure qui représente une vue méridienne d'un schéma d'un pneumatique selon un mode de réalisation de l'invention.

La figure n'est pas représentée à l'échelle pour en simplifier la compréhension.

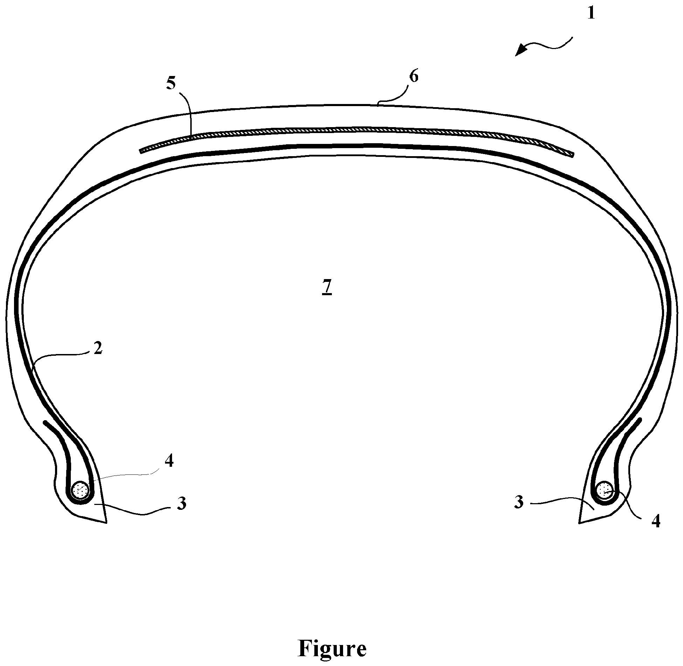

Sur la figure 1, le pneumatique 1, de dimension 315/70 R 22.5, comprend une armature de carcasse radiale 2 ancrée dans deux bourrelets 3, autour de tringles 4. L'armature de carcasse 2 est formée d'une seule couche de câbles métalliques insérés entre deux couches de calandrage. L'armature de carcasse 2 est frettée par une armature de sommet 5, elle-même coiffée d'une bande de roulement 6. La figure indique encore la cavité 7 du pneumatique destinée à recevoir l'air de gonflage.

Conformément à l'invention, le module d'élasticité sous tension à 10 % d'allongement des couches de calandrage de la couche d'armature de carcasse 2 est inférieur à 8.5 MPa et la valeur de Log (ρ) qui exprime la résistivité électrique des couches de calandrage de la couche d'armature de carcasse 2 est supérieur à 8 Ohm.cm.

La valeur maximale de tan(δ), noté tan(δ)max, des couches de calandrage de la couche d'armature de carcasse 2 est inférieure à 0.070.

Des essais ont été réalisés avec différents pneumatiques réalisés selon l'invention et comparés avec des pneumatiques de référence.

Des essais sont réalisés en faisant varier les caractéristiques des mélanges des couches de calandrage de la couche d'armature de carcasse 2, notamment leur module d'élasticité sous tension à 10 % d'allongement et la valeur de log(ρ), ρ étant exprimé en ohm.cm.

Les différents mélanges utilisés sont listés ci-après.

| | Mélange R1 | Mélange 1 | Mélange 2 | Mélange 3 |
|---|---|---|---|---|
| NR | 100 | 100 | 100 | 100 |
| Noir N347 | | 33 | | |
| Noir N683 | | | 44 | 30 |
| Noir N326 | 61 | | | |
| Antioxydant (6PPD) | 1.8 | 1 | 1 | 1 |
| Acide stéarique | 0.6 | 0.65 | 0.65 | 0.65 |
| Oxyde de zinc | 9.3 | 9.3 | 9.3 | 9.3 |
| Sel de Cobalt (AcacCo) | 1.12 | 1.12 | 1.12 | 1.12 |
| soufre | 7 | 6.1 | 6.1 | 6.1 |
| Accélérateur DCBS | 0.93 | 0.93 | 0.93 | 0.93 |
| Retardateur CTP PVI) | | 0.25 | 0.25 | 0.25 |
| MA₁₀(MPa) | 9.8 | 5.56 | 6.16 | 4.4 |
| tan(δ)ₘₐₓ | 0.12 | 0.074 | 0.056 | 0.030 |
| Résisitivité (logrho) | 3 | >10 | 9 | >10 |

Les pneumatiques I1 et I2 selon l'invention sont réalisés avec une couche d'armature de carcasse dont les calandrages sont constitués des mélanges choisis parmi les mélanges 1 à 3.

Les câbles de la couche d'armature de carcasse sont des câbles à couche de structure 1+6+12, non fretté, constitué d'un noyau central formé d'un fil, d'une couche intermédiaire formée de six fils et d'une couche externe formée de douze fils.

Il présente les caractéristiques suivantes (d et p en mm) :
- structure 1+6+12 ;
- d₁ = 0.20 (mm);
- d₂ = 0.18 (mm);
- p₂ = 10 (mm)
- d₃ = 0.18 (mm);
- p₂ = 10 (mm),
- (d₂/d₃) = 1 ;
avec d₂, p₂, respectivement le diamètre et le pas d'hélice de la couche intermédiaire et d₃ et p₃, respectivement le diamètre et le pas de d'hélice des fils de la couche externe.

Les câbles des pneumatiques I1 selon l'invention présente une aptitude à la pénétration, mesurée selon la méthode décrite précédemment, inférieure à 10 %.

L'âme des câbles des pneumatiques I2 selon l'invention, constituée du noyau central formé du fil et de la couche intermédiaire formée des six fils, est gainée par une composition de caoutchouc. Le gainage est obtenu via une tête d'extrusion de l'âme suivi d'une opération finale de retordage ou câblage des 12 fils autour de l'âme ainsi gainé.

La composition élastomérique constituant la gaine de caoutchouc est réalisée à partir des mélanges 1 à 3 et présente dans le cas présent la même formulation que celle des couches de calandrage de la couche d'armature de carcasse.

L'aptitude à la pénétration des câbles des pneumatiques I2 selon l'invention, mesurée selon la méthode décrite précédemment, est égale à 95 %.

Des pneumatiques de référence T sont réalisés avec une couche d'armature de carcasse dont les calandrages sont constitués du mélange R1.

Les câbles de la couche d'armature de carcasse des pneumatiques de référence T sont identiques à ceux des pneumatiques I1 selon l'invention.

Des essais d'endurance en roulage sur volant ont été réalisés sur une machine de tests imposant aux pneumatiques des conditions nominales d'usage, avec un gonflage des pneumatiques dopé en oxygène et contenant de l'eau. Les essais ont été réalisés pour les pneumatiques selon l'invention avec des conditions identiques à celles appliquées aux pneumatiques de référence.

Après un roulage suffisant conduisant à une dégradation prononcée de la couche d'armature de carcasse des pneumatiques de référence T, les éléments de renforcement de la couche d'armature de carcasse sont analysées. Les mesures effectuées correspondent à des longueurs d'éléments de renforcement corrodées et des nombres de ruptures desdits éléments de renforcement.

Des mesures identiques sont effectuées sur les pneumatiques I1, I2 réalisés selon l'invention après un kilométrage parcouru identique à celui des pneumatiques T dans les mêmes conditions.

Les résultats sont exprimés dans le tableau qui suit en référence à une base 100 fixé pour les pneumatiques de référence T. On fixe une base 100 d'une part pour les longueurs d'éléments de renforcement corrodées et une autre base 100 pour le dénombrement de ruptures d'éléments de renforcement.

| | Pneumatique T | Pneumatique I1 | Pneumatique I2 |
|---|---|---|---|
| Longueur corrodée | 100 | 80 | 70 |
| Nombre de ruptures | 100 | 70 | 60 |

Ces essais montrent notamment que la conception des pneumatiques selon l'invention permet de retarder la corrosion des éléments de renforcement de la couche de protection et est donc favorable aux performances en termes d'endurance des pneumatiques.

Par ailleurs, des mesures de résistance au roulement ont été effectuées. Ces mesures ont porté sur le pneumatique de référence T, le mélange R1 étant utilisé pour les couches de calandrages de la couche d'armature de carcasse, et sur des pneumatiques selon l'invention I1 tel que décrit précédemment, le mélange 2 étant utilisé pour les couches de calandrages de la couche d'armature de carcasse.

Les résultats des mesures sont présentés dans le tableau suivant ; elles sont exprimées en Kg/t, une valeur de 100 étant attribuée au pneumatique T.

| Pneumatique T | Pneumatique I1 |
|---|---|
| 100 | 98 |

## Revendications

1. Pneumatique à armature de carcasse radiale, constituée d'au moins une couche d'éléments de renforcement métalliques insérés entre deux couches de calandrage de mélange élastomérique comportant une charge renforçante constituée par au moins du noir de carbone, ledit pneumatique comprenant une armature de sommet, elle-même coiffée radialement d'une bande de roulement, ladite bande de roulement étant réunie à deux bourrelets par l'intermédiaire de deux flancs, ledit pneumatique formant une cavité interne destinée à recevoir l'air de gonflage, **caractérisé en ce que** le module d'élasticité sous tension à 10 % d'allongement d'au moins la couche de calandrage la plus proche de la cavité interne d'au moins la couche d'armature de carcasse la plus proche de la cavité interne est inférieur à 8,5 MPa et **en ce qu'**au moins ladite couche de calandrage la plus proche de la cavité interne d'au moins la couche d'armature de carcasse la plus proche de la cavité interne présente une résistivité électrique volumique ρ telle que log(p) est supérieur à 8.

2. Pneumatique selon la revendication 1, **caractérisé en ce que** la valeur maximale de tan(δ), noté tan(δ)max, d'au moins ladite couche de calandrage la plus proche de la cavité interne d'au moins la couche d'armature de carcasse la plus proche de la cavité interne, est inférieure à 0.080 et de préférence inférieure à 0.070.

3. Pneumatique selon l'une des revendications 1 ou 2, **caractérisé en ce qu'**au moins ladite couche de calandrage la plus proche de la cavité interne d'au moins la couche d'armature de carcasse la plus proche de la cavité interne est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET supérieure à 60 m²/g employé à un taux compris entre 20 et 40 pce,
b) soit par du noir de carbone de surface spécifique BET inférieure à 60 m²/g employé à un taux compris entre 20 et 80 pce, et de préférence entre 30 et 50 pce,
c) soit par un coupage de noir de carbone décrit en (a) et/ou de noir de carbone décrit en (b) et/ou une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET comprise entre 50 et 350 m²/g et/ou de surface spécifique CTAB comprise entre 50 et 250 m²/g.

4. Pneumatique selon l'une des revendications précédentes, **caractérisé en ce que** les éléments de renforcement métalliques d'au moins la couche d'armature de carcasse la plus proche de la cavité interne sont des câbles non frettés présentant au test dit de perméabilité un débit inférieur à 20 cm³/min.

5. Pneumatique selon la revendication 4, **caractérisé en ce que** les éléments de renforcement métalliques d'au moins la couche d'armature de carcasse la plus proche de la cavité interne sont des câbles non frettés présentant au test dit de perméabilité un débit inférieur à 10 cm³/min et de préférence inférieur à 2 cm³/min.

6. Pneumatique selon la revendication 5, **caractérisé en ce que** les éléments de renforcement métalliques d'au moins une couche de l'armature de carcasse sont des câbles à au moins deux couches, au moins une couche interne étant gainée d'une couche constituée d'une composition de caoutchouc non réticulable, réticulable ou réticulée, de préférence à base d'au moins un élastomère diénique.

7. Pneumatique selon la revendication 6, **caractérisé en ce que** ladite couche constituée d'une composition de caoutchouc non réticulable, réticulable ou réticulée gainant au moins une couche interne des câbles d'au moins la couche d'armature de carcasse la plus proche de la cavité interne du pneumatique, de préférence à base d'au moins un élastomère diénique est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET supérieure à 60 m²/g employé à un taux compris entre 20 et 40 pce,
b) soit par du noir de carbone de surface spécifique BET inférieure à 60 m²/g employé à un taux compris entre 20 et 80 pce, et de préférence entre 30 et 50 pce,
c) soit par un coupage de noir de carbone décrit en (a) et/ou de noir de carbone décrit en (b) et/ou une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET comprise entre 50 et 350 m²/g et/ou de surface spécifique CTAB comprise entre 50 et 250 m²/g.

8. Pneumatique selon l'une des revendications 6 ou 7, **caractérisé en ce que** les éléments de renforcement métalliques d'au moins la couche d'armature de carcasse la plus proche de la cavité interne sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, et **en ce qu'**une gaine constituée d'une composition de caoutchouc réticulable ou réticulée à base d'au moins un élastomère diénique, recouvre, dans la construction [L+M], ladite première couche C1 et, dans la construction [L+M+N], au moins ladite couche C2.

9. Pneumatique selon la revendication 8, **caractérisé en ce que** le diamètre des fils de la première couche (C1) est compris entre 0.10 et 0.5 mm, et **en ce que** le diamètre des fils des couches (C2, C3) est compris entre 0.10 et 0.5 mm.

10. Pneumatique selon la revendication 8 ou 9, **caractérisé en ce que** le pas d'hélice d'enroulement desdits fils de la couche externe (C3) est compris entre 8 et 25 mm

11. Pneumatique selon l'une des revendications précédentes, **caractérisé en ce que** l'armature de sommet est formée d'au moins deux couches de sommet de travail d'éléments de renforcement inextensibles, croisés d'une couche à l'autre en faisant avec la direction circonférentielle des angles compris entre 10° et 45°.

12. Pneumatique selon l'une des revendications précédentes, **caractérisé en ce que** l'armature de sommet comporte encore au moins une couche d'éléments de renforcement circonférentiels.

13. Pneumatique selon l'une des revendications précédentes, **caractérisé en ce que** l'armature de sommet est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

14. Pneumatique selon l'une des revendications précédentes, **caractérisé en ce que** l'armature de sommet comporte en outre une couche de triangulation formée d'éléments de renforcement métalliques faisant avec la direction circonférentielle des angles supérieurs à 60°.

## Patentansprüche

1. Reifen mit radialer Karkassenbewehrung, die aus mindestens einer Schicht aus metallischen Verstärkungselementen besteht, die zwischen zwei Kalandrierschichten aus Elastomermischung eingefügt sind, die einen verstärkenden Füllstoff beinhaltet, der mindestens aus Ruß besteht, wobei der Reifen eine Scheitelbewehrung umfasst, die wiederum radial von einem Laufstreifen überdeckt wird, wobei der Laufstreifen über zwei Flanken mit zwei Wülsten verbunden ist, wobei der Reifen einen inneren Hohlraum bildet, der dazu bestimmt ist, die Aufblasluft aufzunehmen, **dadurch gekennzeichnet, dass** der Zugmodul bei 10 % Dehnung mindestens der dem inneren Hohlraum nächstgelegenen Kalandrierschicht mindestens der dem inneren Hohlraum nächstgelegenen Karkassenbewehrungsschicht kleiner als 8,5 MPa ist, und dadurch, dass mindestens die dem inneren Hohlraum nächstgelegene Kalandrierschicht mindestens der dem inneren Hohlraum nächstgelegenen Karkassenbewehrungsschicht einen derartigen spezifischen Durchgangswiderstand ρ aufweist, dass log(p) größer als 8 ist.

2. Reifen nach Anspruch 1, **dadurch gekennzeichnet, dass** der Höchstwert von tan(δ), notiert als tan(δ)max, mindestens der dem inneren Hohlraum nächstgelegenen Kalandrierschicht mindestens der dem inneren Hohlraum nächstgelegenen Karkassenbewehrungsschicht kleiner als 0,080 und bevorzugt kleiner als 0,070 ist.

3. Reifen nach Anspruch 1 oder 2, **dadurch gekennzeichnet, dass** mindestens die dem inneren Hohlraum nächstgelegene Kalandrierschicht mindestens der dem inneren Hohlraum nächstgelegenen Karkassenbewehrungsschicht eine Elastomermischung auf der Basis von natürlichem Kautschuk oder synthetischem Polyisopren mit mehrheitlich cis-1,4-Verkettungen und gegebenenfalls mindestens einem weiteren Dienelastomer, wobei der natürliche Kautschuk oder das synthetische Polyisopren im Fall eines Verschnitts in einem mehrheitlichen Anteil bezogen auf den Anteil des oder der anderen verwendeten Dienelastomere vorliegt, und aus einem verstärkenden Füllstoff ist, der besteht:
a) entweder aus Ruß mit einer spezifischen Oberfläche nach BET von mehr als 60 m²/g, der in einem Anteil zwischen 20 und 40 pce verwendet wird,
b) oder aus Ruß mit einer spezifischen Oberfläche nach BET von weniger als 60 m²/g, der in einem Anteil zwischen 20 und 80 pce und bevorzugt zwischen 30 und 50 pce verwendet wird,
c) oder aus einem Verschnitt aus dem unter (a) beschriebenen Ruß und/oder dem unter (b) beschriebenen Ruß, wobei der Füllstoffgesamtanteil zwischen 20 und 80 pce und bevorzugt zwischen 40 und 60 pce beträgt, wobei der weiße Füllstoff vom Typ Siliciumdioxid und/oder Aluminiumoxid mit SiOH- und/oder AlOH-Oberflächenfunktionen ist, der aus der Gruppe gewählt ist, die aus den ausgefällten oder pyrogenen Siliciumdioxiden, den Aluminiumoxiden oder den Aluminosilikaten gebildet wird, oder aber den während oder nach der Synthese modifizierten Rußen mit einer spezifischen Oberfläche nach BET zwischen 50 und 350 m²/g und/oder einer spezifischen Oberfläche nach CTAB zwischen 50 und 250 m²/g.

4. Reifen nach einem der vorhergehenden Ansprüche, **dadurch gekennzeichnet, dass** die metallischen Verstärkungselemente mindestens der dem inneren Hohlraum nächstgelegenen Karkassenbewehrungsschicht nicht bandagierte Seile sind, die beim sogenannten Permeabilitätstest einen Durchsatz von weniger als 20 cm³/min aufweisen.

5. Reifen nach Anspruch 4, **dadurch gekennzeichnet, dass** die metallischen Verstärkungselemente mindestens der dem inneren Hohlraum nächstgelegenen Karkassenbewehrungsschicht nicht bandagierte Seile sind, die beim sogenannten Permeabilitätstest einen Durchsatz von weniger als 10 cm³/min und bevorzugt weniger als 2 cm³/min aufweisen.

6. Reifen nach Anspruch 5, **dadurch gekennzeichnet, dass** die metallischen Verstärkungselemente mindestens einer Karkassenbewehrungsschicht Seile mit mindestens zwei Schichten sind, wobei mindestens eine innere Schicht von einer Schicht umhüllt ist, die aus einer nicht vernetzbaren, vernetzbaren oder vernetzten Kautschukzusammensetzung besteht, bevorzugt auf der Basis mindestens eines Dienelastomers.

7. Reifen nach Anspruch 6, **dadurch gekennzeichnet, dass** die aus einer nicht vernetzbaren, vernetzbaren oder vernetzten Kautschukzusammensetzung bestehende Schicht, die mindestens eine innere Schicht der Seile mindestens der dem inneren Hohlraum des Reifens nächstgelegenen Karkassenbewehrungsschicht ummantelt, bevorzugt auf der Basis mindestens eines Dienelastomers, eine Elastomermischung auf der Basis von natürlichem Kautschuk oder synthetischem Polyisopren mit mehrheitlich cis-1,4-Verkettungen und gegebenenfalls mindestens einem weiteren Dienelastomer, wobei der natürliche Kautschuk oder das synthetische Polyisopren im Fall eines Verschnitts in einem mehrheitlichen Anteil bezogen auf den Anteil des oder der anderen verwendeten Dienelastomere vorliegt, und aus einem verstärkenden Füllstoff ist, der besteht:
a) entweder aus Ruß mit einer spezifischen Oberfläche nach BET von mehr als 60 m²/g, der in einem Anteil zwischen 20 und 40 pce verwendet wird,
b) oder aus Ruß mit einer spezifischen Oberfläche nach BET von weniger als 60 m²/g, der in einem Anteil zwischen 20 und 80 pce und bevorzugt zwischen 30 und 50 pce verwendet wird,
c) oder aus einem Verschnitt aus dem unter (a) beschriebenen Ruß und/oder dem unter (b) beschriebenen Ruß, wobei der Füllstoffgesamtanteil zwischen 20 und 80 pce und bevorzugt zwischen 40 und 60 pce beträgt, wobei der weiße Füllstoff vom Typ Siliciumdioxid und/oder Aluminiumoxid mit SiOH- und/oder AlOH-Oberflächenfunktionen ist, der aus der Gruppe gewählt ist, die aus den ausgefällten oder pyrogenen Siciumdioxiden, den Aluminiumoxiden oder den Aluminosilikaten gebildet wird, oder aber den während oder nach der Synthese modifizierten Rußen mit einer spezifischen Oberfläche nach BET zwischen 50 und 350 m²/g und/oder einer spezifischen Oberfläche nach CTAB zwischen 50 und 250 m²/g.

8. Reifen nach einem der Ansprüche 6 oder 7, **dadurch gekennzeichnet, dass** die metallischen Verstärkungselemente mindestens der dem inneren Hohlraum nächstgelegenen Karkassenbewehrungsschicht Metallseile mit Schichten mit dem Aufbau [L+M] oder [L+M+N] sind, die als Verstärkungselement einer Karkassenbewehrung eines Reifens verwendbar sind und die eine erste Schicht C1 aus L Drähten mit einem Durchmesser d₁ mit L von 1 bis 4, umgeben von mindestens einer Zwischenschicht C2 aus M Drähten mit einem Durchmesser d₂, die zusammen mit einer Steigung p₂ schraubenförmig aufgewickelt sind, mit M von 3 bis 12, aufweisen, wobei die Schicht C2 gegebenenfalls von einer Außenschicht C3 aus N Drähten mit einem Durchmesser d₃, die zusammen mit der Steigung p₃ schraubenförmig aufgewickelt sind, mit N von 8 bis 20, umgeben ist, und dadurch, dass eine aus einer vernetzbaren oder vernetzten Kautschukzusammensetzung auf der Basis mindestens eines Dienelastomers bestehende Hülle in dem Aufbau [L+M] die erste Schicht C1 und in dem Aufbau [L+M+N] mindestens die Schicht C2 bedeckt.

9. Reifen nach Anspruch 8, **dadurch gekennzeichnet, dass** der Durchmesser der Drähte der ersten Schicht (C1) zwischen 0,10 und 0,5 mm beträgt, und dadurch, dass der Durchmesser der Drähte der Schichten (C2, C3) zwischen 0,10 und 0,5 mm beträgt.

10. Reifen nach Anspruch 8 oder 9, **dadurch gekennzeichnet, dass** die Schraubenwickelsteigung der Drähte der Außenschicht (C3) zwischen 8 und 25 mm beträgt.

11. Reifen nach einem der vorhergehenden Ansprüche, **dadurch gekennzeichnet, dass** die Scheitelbewehrung aus mindestens zwei Arbeitsscheitelschichten aus nicht dehnbaren Verstärkungselementen gebildet wird, die sich von einer Schicht zur anderen kreuzen und dabei mit der Umfangsrichtung Winkel zwischen 10° und 45° bilden.

12. Reifen nach einem der vorhergehenden Ansprüche, **dadurch gekennzeichnet, dass** die Scheitelbewehrung ferner mindestens eine Schicht aus Umfangsverstärkungselementen aufweist.

13. Reifen nach einem der vorhergehenden Ansprüche, **dadurch gekennzeichnet, dass** die Scheitelbewehrung radial außen um mindestens eine zusätzliche Lage, Schutzlage genannt, aus elastischen Verstärkungselementen ergänzt wird, die bezogen auf die Umfangsrichtung mit einem Winkel zwischen 10° und 45° und der gleichen Richtung wie der Winkel, der von den nicht dehnbaren Elementen der zu ihr radial benachbarten Arbeitsscheitellage gebildet wird, ausgerichtet sind.

14. Reifen nach einem der vorhergehenden Ansprüche, **dadurch gekennzeichnet, dass** die Scheitelbewehrung ferner eine Triangulationsschicht aufweist, die aus metallischen Verstärkungselementen gebildet wird, die mit der Umfangsrichtung Winkel von mehr als 60° bilden.

## Claims

1. Tyre with a radial carcass reinforcement, made up of at least one layer of metal reinforcing elements inserted between two skim layers of elastomer compound containing a reinforcing filler made up of at least carbon black, the said tyre comprising a crown reinforcement, itself capped radially by a tread, the said tread being connected to two beads by two sidewalls, the said tyre forming an internal cavity intended to accept inflation air, **characterized in that** the tensile elastic modulus at 10% elongation of at least the skim layer closest to the internal cavity of at least the carcass reinforcement layer closest to the internal cavity is less than 8.5 MPa and **in that** at least the said skim layer closest to the internal cavity of at least the carcass reinforcement layer closest to the internal cavity has an electrical resistivity per unit volume ρ such that log(ρ) is greater than 8.

2. Tyre according to Claim 1, **characterized in that** the maximum value of tan(δ), denoted tan(δ)max, of at least the said skim layer closest to the internal cavity of at least the carcass reinforcement layer closest to the internal cavity is less than 0.080 and preferably less than 0.070.

3. Tyre according to one of Claims 1 and 2, **characterized in that** at least the said skim layer closest to the internal cavity of at least the carcass reinforcement layer closest to the internal cavity is an elastomer compound based on natural rubber or on synthetic polyisoprene with a predominance of cis-1,4- linkages and possibly on at least one other diene elastomer, the natural rubber or synthetic polyisoprene in the case of a blend being present at a predominant content relative to the content of the other diene elastomer(s) used, and on a reinforcing filler consisting:
a) either of carbon black with a BET specific surface area greater than 60 m²/g used at a content of between 20 and 40 phr,
b) or of carbon black with a BET specific surface area less than 60 m²/g used at a content of between 20 and 80 phr and preferably between 30 and 50 phr,
c) or of a blend of carbon black described under (a) and/or of carbon black described under (b) and/or a white filler, in which the overall filler content is between 20 and 80 phr, and preferably between 40 and 60 phr, the said white filler being of silica and/or alumina type, comprising SiOH and/or AlOH surface functions selected from the group consisting of precipitated or fumed silicas, aluminas or aluminosilicates, or else carbon blacks modified during or after synthesis, with a BET specific surface area of between 50 and 350 m²/g and/or a CTAB specific surface area of between 50 and 250 m²/g.

4. Tyre according to one of the preceding claims, **characterized in that** the metal reinforcing elements of at least the carcass reinforcement layer closest to the internal cavity are non-wrapped cords having a flow rate of less than 20 cm³/min in the "permeability" test.

5. Tyre according to Claim 4, **characterized in that** the metal reinforcing elements of at least the carcass reinforcement layer closest to the internal cavity are non-wrapped cords having a flow rate of less than 10 cm³/min, and preferably less than 2 cm³/min, in the "permeability" test.

6. Tyre according to Claim 5, **characterized in that** the metal reinforcing elements of at least one layer of the carcass reinforcement are cords having at least two layers, at least one internal layer being sheathed with a layer consisting of a non-crosslinkable, crosslinkable or crosslinked rubber composition, preferably based on at least one diene elastomer.

7. Tyre according to Claim 6, **characterized in that** the said layer consisting of a non-crosslinkable, crosslinkable or crosslinked rubber composition sheathing at least an internal layer of the cords of at least the carcass reinforcement layer closest to the internal cavity of the tyre, preferably based on at least one diene elastomer, is an elastomer compound based on natural rubber or on synthetic polyisoprene with a predominance of cis-1,4- linkages and possibly on at least one other diene elastomer, the natural rubber or synthetic polyisoprene in the case of a blend being present at a predominant content relative to the content of the other diene elastomer(s) used, and on a reinforcing filler consisting:
a) either of carbon black with a BET specific surface area greater than 60 m²/g used at a content of between 20 and 40 phr,
b) or of carbon black with a BET specific surface area less than 60 m²/g used at a content of between 20 and 80 phr, preferably between 30 and 50 phr,
c) or of a blend of carbon black described under (a) and/or of carbon black described under (b) and/or a white filler, in which the overall filler content is between 20 and 80 phr, and preferably between 40 and 60 phr, the said white filler being of silica and/or alumina type, comprising SiOH and/or AlOH surface functions selected from the group consisting of precipitated or fumed silicas, aluminas or aluminosilicates, or else carbon blacks modified during or after synthesis, with a BET specific surface area of between 50 and 350 m²/g and/or a CTAB specific surface area of between 50 and 250 m²/g.

8. Tyre according to one of Claims 6 and 7, **characterized in that** the metal reinforcing elements of at least the carcass reinforcement layer closest to the internal cavity are layered metal cords of [L+M] or [L+M+N] construction that can be used as reinforcing elements in a tyre carcass reinforcement, comprising a first layer C1 of L threads of diameter d₁, with L ranging from 1 to 4, surrounded by at least one intermediate layer C2 of M threads of diameter d₂ wound together in a helix at a pitch p₂ with M ranging from 3 to 12, the said layer C2 possibly being surrounded by an outer layer C3 of N threads of diameter d₃ wound together in a helix at a pitch p₃ with N ranging from 8 to 20, and **in that** a sheath consisting of a crosslinkable or crosslinked rubber composition based on at least one diene elastomer covers the said first layer C1 in the [L+M] construction and at least the said layer C2 in the [L+M+N] construction.

9. Tyre according to Claim 8, **characterized in that** the diameter of the threads of the first layer (C1) is between 0.10 and 0.5 mm, and **in that** the diameter of the threads of the layers (C2, C3) is between 0.10 and 0.5 mm.

10. Tyre according to Claim 8 or 9, **characterized in that** the helical pitch at which the said threads of the external layer (C3) are wound is between 8 and 25 mm.

11. Tyre according to one of the preceding claims, **characterized in that** the crown reinforcement is formed of at least two working crown layers of inextensible reinforcing elements that are crossed from one layer to the other and form, with the circumferential direction, angles of between 10° and 45°.

12. Tyre according to one of the preceding claims, **characterized in that** the crown reinforcement furthermore comprises at least one layer of circumferential reinforcing elements.

13. Tyre according to one of the preceding claims, **characterized in that** the crown reinforcement is supplemented radially on the outside by at least one additional ply, referred to as a protective ply, of "elastic" reinforcing elements, oriented at an angle of between 10° and 45° relative to the circumferential direction and in the same direction as the angle formed by the inextensible working ply elements radially adjacent thereto.

14. Tyre according to one of the preceding claims, **characterized in that** the crown reinforcement furthermore comprises a triangulation layer formed of metal reinforcing elements forming angles of greater than 60° with the circumferential direction.
